# EUROPÄISCHE PATENTSCHRIFT

(11) **EP 2 718 610 B1**
(45) Veröffentlichungstag und Bekanntmachung des Hinweises auf die Patenterteilung: **06.09.2017**
(21) Anmeldenummer: 12727815.8
(22) Anmeldetag: 05.06.2012
(51) Int. Cl.: F16T 1/38, F16T 1/02

(54) **KONDENSATABLEITER UND VERFAHREN ZUM ABLEITEN VON KONDENSAT**
STEAM TRAP AND METHOD FOR DRAINING CONDENSATE
PURGEUR DE CONDENSAT ET PROCÉDÉ DE PURGE DE CONDENSAT

(30) Priorität: 09.06.2011 DE 102011050955
(43) Veröffentlichungstag der Anmeldung: 16.04.2014
(73) Patentinhaber: Elopak AS, 3431 Spikkestad (NO)
(72) Erfinder: AUER, Dirk, 40670 Meerbusch (DE); EMMERICH, Rüdiger, 41363 Jüchen (DE)
(74) Vertreter: Kohlmann, Kai
(86) Internationale Anmeldenummer: PCT/EP2012/060570
(87) Internationale Veröffentlichungsnummer: WO 2012/168221

(56) Entgegenhaltungen:
- DE-A1- 1 526 993
- DE-A1- 1 751 699
- DE-B1- 2 822 351
- DE-B1- 2 855 900
- US-A- 3 286 926

## Beschreibung

Die Erfindung betrifft einen Kondensatableiter mit einem Auslass zum Ableiten von Kondensat aus einem Ventilraum, einem in dem Ventilraum angeordneten Ventilsitz und einem im geschlossenen Zustand auf dem Ventilsitz aufsitzenden Verschlusselement zum Öffnen und Schließen des Auslasses, wobei der Kondensatableiter einen Antrieb für das Verschlusselement aufweist, um das Verschlusselement in den geschlossenen Zustand und einen geöffneten Zustand zu bringen. Außerdem betrifft die Erfindung ein Verfahren zum Ableiten von Kondensat und die Verwendung eines Kondensatableiters in einer Abfüllmaschine für Lebensmittel.

In Abfüllanlagen für Lebensmittel, insbesondere flüssige Lebensmittel, wird Dampf für die Sterilisation von Anlagenteilen und zur aseptischen Absicherung des Abfüllprozesses eingesetzt. Zur Gewährleistung der Prozesssicherheit müssen eine möglichst exakte Temperaturführung des Dampfes und damit ein konstanter Dampfdruck sichergestellt sein. Auf Grund von Temperaturunterschieden zwischen den Dampf führenden Leitungen der Füllmaschine und der Umgebungstemperatur kommt es in Folge der Energieabgabe in den Leitungen zwangsläufig zu einer Kondensation des Dampfes. Das gut wärmeleitende Kondensat kühlt recht schnell ab und verhindert, dass die von dem Kondensat benetzten Teile der Füllmaschine, insbesondere Leitungen und Prozessorgane, nicht weiter auf der erforderlichen Temperatur gehalten werden können, die für einen prozesssicheren Betrieb bzw. eine Sterilisation erforderlich ist. Aus diesem Grund ist es erforderlich, das Kondensat aus den Dampf führenden Leitungen abzuleiten.

Um einen unkontrollierten Temperatur- und Druckabfall in den Dampf führenden Leitungen beim Ablassen des Kondensats zu begrenzen, kommen so genannte Kondensatableiter zum Einsatz.

Thermodynamische Kondensatableiter sind kostengünstig, relativ einfach aufgebaut und kompakt. Ein in einem Verkaufsprospekt "TLV, Thermodyne, Thermodynamische Kondensatableiter, 11/2007 offenbarter thermodynamischer Kondensatablaufleiter der Firma TLV Co., Ltd., Kakogawa, Japan, weist zur Kondensatabführung einen in Strömungsrichtung nach unten geneigten Kanal mit einem rohrförmigen Siebeinsatz auf. Der Siebeinsatz dient der Filterung von Verunreinigungen aus dem einströmenden Dampf oder Kondensat. Getrennt durch den Siebeinsatz steigt der Dampf oder das Kondensat durch eine mit dem geneigten Kanal kommunizierende, senkrecht verlaufende Steigleitung in Richtung eines Ventilsitzes für eine Ventilplatte. Unterhalb der Ventilplatte ist konzentrisch um die Steigleitung ein Bimetallring auf einem konischen Sitz angeordnet. Im kalten Zustand, beim Anfahren des Kondensatableiters, hebt der Bimetallring den Ventilteller vom Ventilsitz ab. Die Erwärmung durch anschließend einströmenden Dampf bewirkt eine Dehnung des Bimetallrings, der entlang des konischen Sitzes nach unten fällt und den Ventilteller freigibt. Infolge des verengten Durchlassquerschnittes fällt der Druck ab und der Ventilteller wird auf den Ventilsitz gezogen, wodurch der Kondensatableiter schließt. Ein Dampfpolster, das sich während des Schließens oberhalb des Ventiltellers gebildet hat, hält den Kondensatableiter geschlossen. Sobald Kondensat in den Kondensatableiter einströmt, gibt das Dampfpolster Wärme ab und bricht zusammen. Der Vordruck des Kondensats hebt den Ventilteller an und Kondensat wird abgeleitet. Durch eintretenden Dampf wird der Kondensatableiter wieder geschlossen, so dass sich der Prozess wiederholt.

Ein Nachteil der bekannten thermodynamischen Kondensatableiter besteht darin, dass der Siebeinsatz regelmäßig gereinigt werden muss. Insoweit ist eine regelmäßige Überwachung und Wartung der thermodynamischen Kondensatableiter erforderlich. Da in Abfüllmaschinen für Lebensmittel regelmäßig zahlreiche Kondensatableiter erforderlich sind, ist deren Betrieb auf Grund der notwendigen Überwachung und Wartung sehr aufwendig.

Die DE 28 22 351 B1 offenbart einen Kondensatableiter mit einem plattenartig ausgebildeten Bimetallkörper in Ringform. Der Kondensatableiter weist zur Kondensatabführung ebenfalls einen in Strömungsrichtung nach unten geneigten Kanal mit einem rohrförmigen Siebeinsatz auf. Der Siebeinsatz dient der Filterung von Verunreinigungen aus dem einströmenden Dampf oder Kondensat. Getrennt durch den Siebeinsatz steigt der Dampf oder das Kondensat durch eine mit dem geneigten Kanal kommunizierende, nach oben verlaufende Steigleitung in Richtung eines Ventilraumes mit einem horizontal verlaufenden Auslasskanal. In dem Auslasskanal sind der Ventilkörper und der Ventilsitz angeordnet. Der Ventilkörper ist an dem freien Ende des Bimetallkörpers befestigt. Auch bei diesem Kondensatableiter muss der Siebeinsatz regelmäßig gereinigt werden.

Aus der DE 1 751 699 A1 und der DE 28 55 900 B1 sind Kondensatableiter mit einem Bimetall-Bügel als Steuerelement für einen Absperrkörper des Ventilraums bekannt. Der Absperrkörper weist einen sowohl im geöffneten als auch geschlossen Zustand des Absperrkörpers in einen Auslass ragenden Abschnitt auf, den ein Ringraum sowohl im geöffneten als auch geschlossen Zustand des Absperrkörpers umgibt.

Aus der US 3 286 926 A ist ein Kondensatableiter mit einem Auslass zum Ableiten von Kondensat aus einem Ventilraum bekannt, wobei der Ventilsitz im Auslass angeordnet ist. Im geschlossenen Zustand sitzt auf dem Ventilsitz ein kugelförmiges Ventilelement zum Öffnen und Schließen des Auslasses auf, das über eine Ventilstange mit einem bimetallischen Antrieb im Ventilraum verbunden ist, um das Verschlusselement in den geschlossenen Zustand und einen geöffneten Zustand zu bringen. Das kugelförmige Verschlusselement befindet sich sowohl im geöffneten als auch geschlossen Zustand in dem Auslass, wobei ein Ringraum zwischen dem Auslass und dem Verschlusselement sowohl im geöffneten als auch geschlossen Zustand des Verschlusselementes eine übereinstimmende Querschnittsfläche aufweist.

Die DE 1526 993 A1 offenbart einen weiteren Kondensatableiter mit einem Bimetall-Bügel als Steuerelement für einen Ventilkörper zum Absperren des Ventilraums. Das ausströmende Kondensat fließt zunächst um eine kegelförmige Erweiterung des Ventilkörpers. An die Erweiterung schließt sich ein zylindrischer Abschnitt des Ventilkörpers an, der sich unter Ausbildung eines Ringraums sowohl im geöffneten als auch geschlossen Zustand des Ventilkörpers in den Auslass erstreckt.

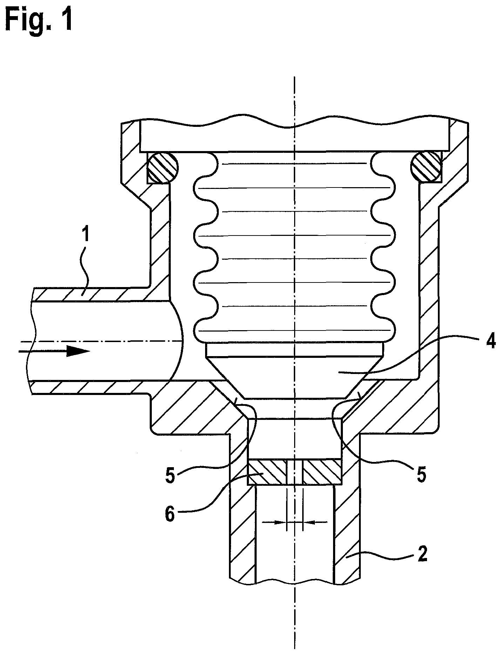

Ein weiterer Kondensatableiter ist in Figur 1 dargestellt. Der Kondensatableiter weist einen waagerecht verlaufenden Zufluss (1) für Dampf und Kondensat auf. Das Kondensat wird über einen nach unten gerichteten, rohrförmigen Auslass (2) aus einem Ventilraum abgeleitet. Vor dem Auslass (2) ist ein pneumatisch betätigter Dichtkegel (4) angeordnet, der im geschlossenen Zustand auf einem konischen Ventilsitz (5) aufsitzt. Beim Anheben des Dichtkegels (4) in den geöffneten Zustand ergibt sich ein relativ großer Durchlassquerschnitt zwischen dem Dichtkegel (4) und dem Ventilsitz (5), wodurch beim Öffnen des Ventils der Dampfdruck schnell abfällt. Um den Dampfdruckabfall zu verlangsamen, ist in den rohrförmigen Auslass (2) eine Drosselscheibe (6) eingesetzt, die den Durchlassquerschnitt auf etwa 2 mm² - 3 mm² reduziert. Durch die Drosselscheibe wird zwar den Dampfdruckabfall (6) begrenzt, jedoch der einwandfreie Abfluss des Kondensats behindert. Des Weiteren sind Verschmutzungen des Durchlasses der Drosselscheibe (6) im Betrieb nicht vermeidbar, so dass eine regelmäßige Reinigung bzw. ein Austausch der Drosselscheibe erforderlich ist.

Ausgehend von dem dargelegten Stand der Technik liegt der Erfindung die Aufgabe zu Grunde, ein Kondensatventil vorzuschlagen, das weitgehend wartungsfrei betreibbar ist und das eine automatische Erkennung etwaiger Störungen in dem Kondensatableiter ermöglicht. Außerdem soll ein Verfahren zum Ableiten von Kondensat vorgeschlagen werden.

Diese Aufgabe wird durch Kondensatableiter mit den Merkmalen des Anspruchs 1 sowie ein Verfahren mit den Merkmalen des Anspruchs 11 gelöst.

Um etwaige Störungen in dem Kondensatableiter automatisch zu erkennen, weist der Kondensatableiter einen Temperatursensor zur Messung der Temperatur in dem Ventilraum auf. Insbesondere wenn eine Füllmaschine für Lebensmittel zahlreiche Kondensatableiter aufweist, lässt sich hierdurch die langwierige Suche eines fehlerhaften Kondensatableiters der Anlage abkürzen.

Das mit einem Ventilsitz des Kondensatableiters zusammenwirkende Dichtteil des Verschlusselementes befindet sich permanent in dem Ventilraum in Strömungsrichtung vor dem Auslass, während der weitere, vorzugsweise zylindrische Abschnitt im geschlossenen Zustand vollständig und im geöffneten Zustand teilweise in den in Einbaulage des Kondensatableiters nach unten gerichteten Auslass ragt.

Der Querschnitt des in den Auslass ragenden Abschnitts ist nur geringfügig kleiner als der Querschnitt des Auslasses, so dass der Druckabfall des Dampfes in den Dampf führenden Leitungen und ggf. im Ventilraum beim Ablassen des Kondensats begrenzt wird. Insbesondere ist die Querschnittsfläche des Ringraumes kleiner als die Querschnittsfläche des in den Auslass ragenden Abschnitts.

Der in den Auslass ragende Abschnitt gewährleistet zudem einen Ringraum zwischen dem Abschnitt und dem Auslass, der eine während des Ableitens des Kondensats ständig gleich große Querschnittsfläche aufweist. Hierdurch wird der Dampfdruck in den Dampf führenden Leitungen und ggf. im Ventilraum nahezu konstant gehalten. Die Größe der Querschnittsfläche des Ringraums stimmt im geöffneten und geschlossenen Zustand sowie allen Zwischenstellungen des Verschlusselementes überein.

Anhaftungen von Verunreinigungen in dem Auslass werden durch den permanent in den Auslass ragenden und in dem Auslass hin- und her beweglichen Abschnitt automatisch gelöst. Diese Selbstreinigung des Auslasses bewirkt, dass die Größe der Querschnittsfläche des Ringraumes sich durch Verunreinigungen nicht verändert. Der Kondensatableiter kann daher praktisch wartungsfrei über lange Zeiträume betrieben werden.

Eine nicht nur in der Größe, sondern auch der Form, übereinstimmende Querschnittsfläche des Ringraumes sowohl im geöffneten als auch geschlossenen Zustand wird vorzugsweise dadurch erreicht, dass der zylindrisch ausgebildete Auslass den zylindrisch ausgebildeten Abschnitt des Verschlusselementes konzentrisch umgibt, wobei vorzugsweise sowohl der Auslass als auch das Verschlusselement einen kreiszylindrischen Querschnitt aufweisen. Der Ringraum weist dann sowohl im geöffneten als auch geschlossenen Zustand sowie allen Zwischenstellungen einen kreisringförmigen Querschnitt mit übereinstimmendem Innen- und Außendurchmesser auf. Die zylindrische Ausbildung des Abschnitts des Verschlusselementes ist außerdem konstruktiv vorteilhaft und sichert zugleich einen strömungstechnisch vorteilhaften Ablauf des Kondensats.

In dem die Fläche des Ventilsitzes kegelförmig ausgebildet ist, ist bei gleicher Baubreite des Kondensatableiters die Abdichtungsfläche größer als bei einem horizontal ausgebildeten Ventilsitz. Der kegelförmig ausgebildete Ventilsitz unterstützt darüber hinaus den Abtransport von Verunreinigungen in Richtung des unterhalb des Ventilsitzes angeordneten Auslasses. Das im geschlossenen Zustand auf der Fläche des kegelförmig ausgebildeten Ventilsitzes aufsitzende Verschlusselement löst Verunreinigungen, die durch das über den Ventilsitz und den Ringraum ausströmende Kondensat durch den Auslass abgefördert werden.

Der Temperatursensor läßt sich außerdem zur temperaturgeführten Betätigung des Verschlusselementes nutzen, wenn der Temperatursensor mit einer Steuerung verbunden ist, die derart eingerichtet ist, dass der Antrieb das Verschlusselement in den geöffneten Zustand bringt, wenn die erfasste Temperatur einen unteren Temperaturgrenzwert erreicht und der Antrieb das Verschlusselement in den geschlossenen Zustand bringt, wenn die erfasste Temperatur einen oberen Temperaturgrenzwert erreicht. Sobald das Kondensat über das geöffnete Verschlusselement abgeflossen ist, steigt die Dampftemperatur wieder an und das Verschlusselement schließt bei Erreichen des oberen Temperaturgrenzwertes wieder.

Die Betätigung des Verschlusselementes erfolgt insbesondere mittels eines pneumatischen Antriebs. Der pneumatische Antrieb ist über einen Stößel mit dem Verschlusselement verbunden. Der Ventilraum ist gegenüber dem pneumatischen Antrieb vorzugsweise durch eine Membran abgeschlossenen.

In einer vorteilhaften Ausgestaltung der Erfindung weist der Kondensatableiter mindestens einen Positionssensor zur Erfassung der Position des Antriebs des Verschlusselements auf. Hierdurch lässt sich die Position des mit dem Antrieb starr verbundenen Verschlusselementes erfassen und abhängig von der erfassten Position des Verschlusselementes erkennen, ob das Verschlusselement nach Erreichen des unteren Temperaturgrenzwerts von dem aktivierten Antrieb tatsächlich bewegt und/oder in den geöffneten Zustand gebracht wurde und ob das Verschlusselement nach Erreichen des oberen Temperaturgrenzwerts von dem aktivierten Antrieb tatsächlich bewegt und/oder in den geschlossenen Zustand gebracht wurde.

Die Steuerung erzeugt ein Fehlersignal, wenn sich der Antrieb des Verschlusselementes nach Erreichen eines der Temperaturgrenzwerte nicht bewegt und/oder der Antrieb das Verschlusselement nach Erreichen eines der Temperaturgrenzwerte nicht in den geöffneten bzw. geschlossenen Zustand gebracht hat. Dieses Fehlersignal kann eine das Kondensatventil identifizierende Kennung aufweisen, um die Fehlererkennung in einer Anlage mit mehreren Kondensatventilen zu vereinfachen.

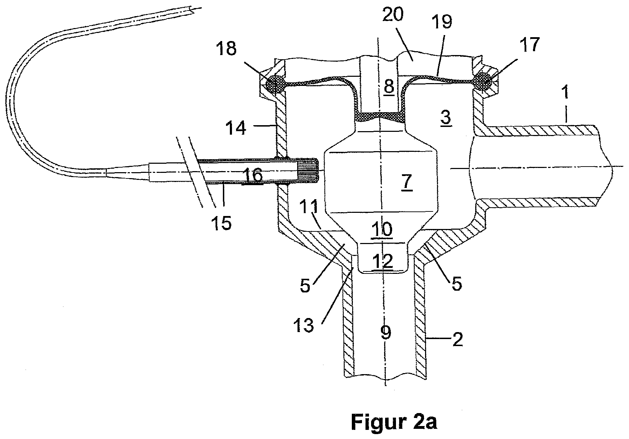

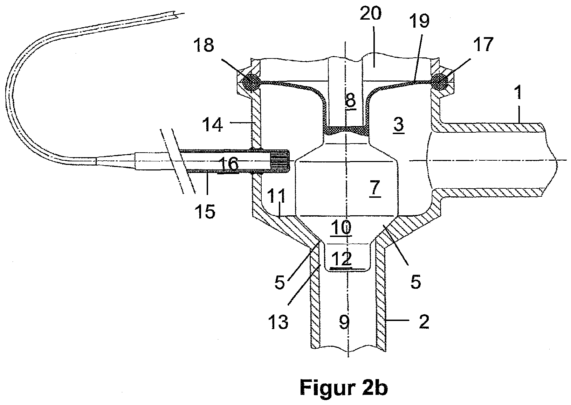

Nachfolgend wird der erfindungsgemäße Kondensatableiter sowie das erfindungsgemäße Verfahren zum Ableiten von Kondensat anhand eines Ausführungsbeispieles näher erläutert. Es zeigen
- **Figur 2 a**: einen erfindungsgemäßen Kondensatableiter im geöffneten Zustand,
- **Figur 2 b**: den Kondensatableiter nach Figur 2 a im geschlossenen Zustand,
- **Figur 3 a**: eine Darstellung des Kondensatableiters nach Figur 2 mit Antrieb und Steuerung im geöffneten Zustand,

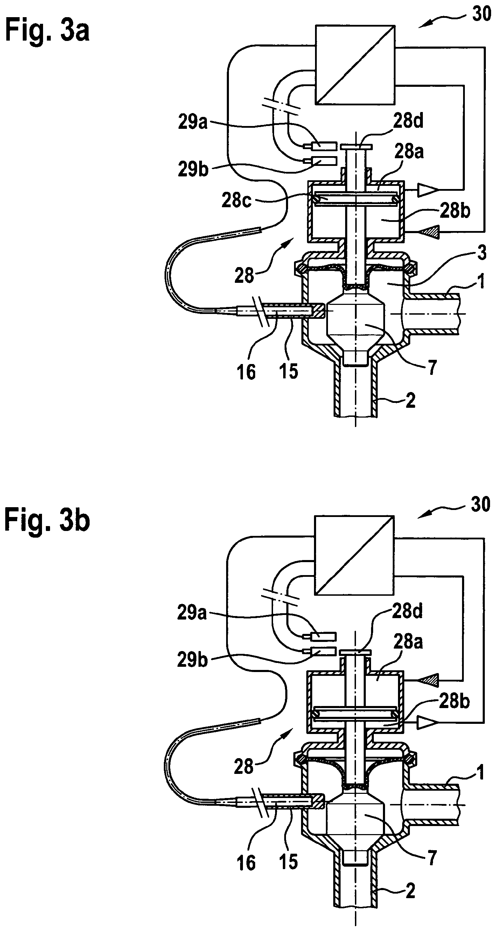

- **Figur 3 b**: eine Darstellung des Kondensatableiters nach Figur 2 mit Antrieb und Steuerung im geschlossenen Zustand ,

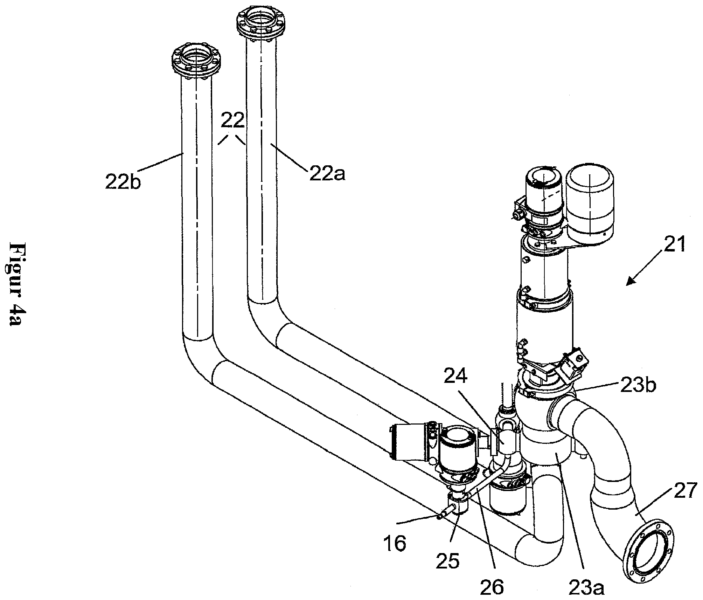

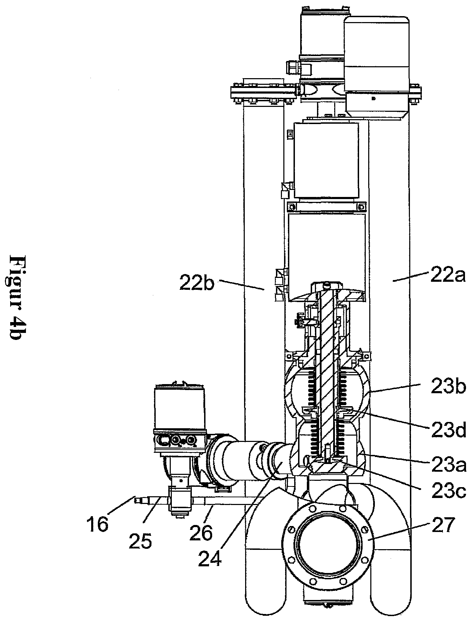

- **Figur 4 a**: die Verwendung eines Kondensatableiters nach Figuren 2, 3 an einem Produktknoten einer Abfüllanlage für Lebensmittel sowie
- **Figur 4 b**: einen Teilschnitt durch den Produktknoten nach Figur 4 a.

Der erfindungsgemäße Kondensatableiter weist einen in einer bevorzugten Einbaulage des Kondensatableiters waagerecht verlaufenden Zufluss (1) für Dampf und Kondensat auf. Der Zufluss (1) mündet in einem Ventilraum (3) mit einem in der bevorzugten Einbaulage an der Unterseite angeordnetem Auslass (2) für das Kondensat. Der rohrförmige Auslass (2) weist einen kreiszylindrischen Innenquerschnitt auf und ist durch ein vorzugsweise pneumatisch betätigbares Verschlusselement (7) verschließbar. Das Verschlusselement (7) ist über einen Stößel (8) mit einem in den Figuren 2a, 2b nicht dargestellten pneumatischen Antrieb verbunden, der eine Bewegung des Stößels (8) und des Verschlusselementes (7) in Richtung der Längsachse (9) des Auslasses (2) bewirkt.

Figur 2 a zeigt das Verschlusselement (7) im geöffneten und Figur 2b im geschlossenen Zustand. Das Verschlusselement(7) weist an seiner Unterseite einen kegelstumpfförmigen Abschnitt (10) auf, dessen Mantelfläche in geschlossenen Zustand auf einem kegelförmig ausgebildeten Ventilsitz (5) aufsitzt. Der Ventilsitz (5) ist in den Boden (11) des Ventilraums (3) eingearbeitet. An die nach unten weisende Deckfläche des kegelstumpfförmigen Abschnitts (10) schließt sich ein kreiszylindrischer Abschnitt (12) des Verschlusselementes (7) an. Der kreiszylindrische Abschnitt (12) kann einstückig mit dem kegelstumpfförmigen Abschnitt (10) des Verschlusselementes (7) ausgebildet sein. Denkbar ist jedoch auch ein lösbar an dem kegelstumpfförmigen Abschnitt (10) angeordneter kreiszylindrischer Abschnitt (12).

Der Durchmesser des kreiszylindrischen Abschnitts (12) ist nur geringfügig kleiner als der Innendurchmesser des Auslasses (2). Wie insbesondere aus Figur 2 a ersichtlich, ragt der kreiszylindrische Abschnitt (12) auch im geöffneten Zustand des Verschlusselementes (7) noch in den Auslass (2) hinein. Hierdurch wird gewährleistet, dass die Querschnittsfläche des zwischen dem kreiszylindrischen Abschnitt (12) und dem Auslass (2) gebildeten Ringraums (13) sowohl im geöffneten als auch geschlossenen Zustand (vgl. Fig. 2a, 2b) sowie allen Zwischenstellungen zwischen dem geöffneten und geschlossenen Zustand in der Größe und Form übereinstimmt. Die Querschnittsfläche weist stets die Form eines Kreisrings auf, dessen Innenkreis dem Durchmesser des Abschnitts (12) und dessen Aussenkreis dem Innendurchmesser des Auslasses (2) entspricht. Die kreisringförmige Querschnittsfläche ist während des Kondensatabflusses unabhängig von der Stellung des Verschlusselementes konstant, so dass sich der Dampfdruck praktisch nicht ändert.

Eine Seitenwand (14) des Ventilraums (3) durchsetzt eine Hülse (15) zur Aufnahme eines Temperatursensors (16). Die Hülse (15) ist an der in den Ventilraum (3) ragenden Stirnseite geschlossen ausgeführt, so dass der Temperatursensor (16) den Einflüssen des Dampfs und Kondensats nicht unmittelbar ausgesetzt ist. In diese Hülse (15) ist der Temperatursensor (16) bis zur Stirnseite der Hülse eingeführt. Die Hülse (15) besteht aus einem gut wärmeleitendem Material, wie beispielsweise einem dünnwandigen Metall. Die Wandstärke beträgt weniger als 0,5 mm, vorzugsweise maximal 0,3 mm, so dass eine relativ geringe Wärmeträgheit vorliegt. Der in den Ventilraum (30) ragende Teil der Hülse (15) befindet sich vorzugsweise unmittelbar benachbart zu dem Auslass (2), so dass der Temperatursensor die dort herrschenden Temperaturen des Dampfes bzw. Kondensats erfasst. Ein wesentlicher Vorteil der Hülse (15) besteht darin, dass im Fall eines Defekts ein Austausch des Temperatursensors (16) ohne Unterbrechung des Betriebs der Anlage, in die der Kondensatableiter eingebaut ist, möglich ist.

Der Temperatursensor (16), beispielsweise ein resistiver Sensor, ein Thermoelement oder ein Pyrometer, ist mit einer lediglich in den Figuren 3a, 3b dargestellten Steuerung (30) zum Verarbeiten der von dem Temperatursensor (16) erfassten Temperaturen verbunden.

Das Öffnen und Schließen des Verschlusselementes (7) wird durch den in den Figuren 3a, 3b dargestellten, oberhalb des Deckels (20) des Kondensatableiters angeordneten pneumatischen Antrieb (28) bewirkt. Um den Ventilraum (3) in Richtung des Antriebs (28) an der Oberseite dicht abzuschließen, ist zwischen dem Verschlusselement (7) und dem Stößel (8) eine Membran (19) angeordnet, an deren äußerem Rand ein umlaufender Wulst (17) angeordnet ist, der in eine in die Innenwand des Ventilraums (3) eingelassene, umlaufende Nut (18) eingreift.

Der in Figuren 3a, 3b dargestellte pneumatische Antrieb (28) ist als beidseitig mit Druckluft beaufschlagbarer Pneumatikzylinder ausgeführt. Eine obere Kammer (28a) wird mit Druckluft beaufschlagt, um das Verschlusselement (7) in den geschlossenen Zustand (Figur 3 b) zu bringen und eine untere Kammer (28b) wird mit Druckluft beaufschlagt, um das Verschlusselement (7) in den geöffneten Zustand (Figur 3 a) zu bringen. Das Verschlusselement (7) ist über den als Kolbenstange ausgeführten Stößel (8) mit dem Kolben (28 c) des Antriebs (28) verbunden. Die durch den Kolben (28 c) hindurchgehende Kolbenstange ragt mit ihrem freien stirnseitigen Ende (28 d) sowohl in dem geöffneten als auch dem geschlossenen Zustand des Verschlusselementes (7) über die obere Kammer (28 a) hinaus.

Als alternative Antriebe für das Verschlusselement (7) kommen insbesondere pneumatische Drehantriebe, elektromotorische Dreh- und Linearantriebe, sowie Servo geregelte Antriebe in Betracht. In einer Ausgestaltung der Erfindung kann der Antrieb (28) mit einer federunterstützten Rückstellung ausgestattet werden, um das Verschlusselement (7) im Falle eines Energieabfalls automatisch in den geschlossenen oder geöffneten Zustand zu bringen.

Zwei Positionssensoren (29a, 29b) erfassen, ob sich das Verschlusselement (7) in dem geschlossenen oder geöffneten Zustand befindet. Die Positionssensoren (29a, 29b) sind entlang des Bewegungswegs der Kolbenstange angeordnet und erfassen die Position des freien stirnseitigen Endes (28 d) des nach außen geführten Abschnitts der Kolbenstange. Befindet sich das freie stirnseitige Ende (28d) im Erfassungsbereich des oberen Positionssensors (29 a) ist das Verschlusselement (7) geöffnet (Figur 3a). Befindet sich das freie stirnseitige Ende (28d) im Erfassungsbereich des unteren Positionssensors (29 b)ist das Verschlusselement (7) geschlossen (Figur 3b). Als Positionssensoren (29a, 29b) kommen insbesondere induktive oder kapazitive Näherungsinitiatoren (berührungslos), potentiometrische Sensoren und mechanische Schalter (elektrisch, pneumatisch) in Betracht. Im dargestellten Ausführungsbeispiel sind die Positionssensoren (29a, 29b) als induktive Näherungsinitiatoren ausgeführt.

Sowohl der Temperatursensor (16) als auch die beiden Positionssensoren (29a, 29b) sind mit der Steuerung (30) verbunden. Die Steuerung (30) ist im dargestellten Ausführungsbeispiel als elektropneumatische Steuerung zur Verarbeitung der erfassten Sensorsignale und Steuerung des pneumatischen Antriebs (28) ausgeführt.

Die Steuerung (30) bringt das Verschlusselement (7) mit Hilfe des Antriebs (28) in den in Figur 3 a dargestellten geöffneten Zustand, wenn die von dem Temperatursensor (16) erfasste Temperatur den unteren Temperaturgrenzwert erreicht. Hierzu wird die untere Kammer (28b) des Antriebs (28) von der Steuerung (30) mit Druckluft beaufschlagt. Sobald in Folge der Ableitung des Kondensates die Temperatur wieder steigt und die von dem Temperatursensor (16) erfasste Temperatur den oberen Temperaturgrenzwert erreicht, wird das Verschlusselement (7) von der Steuerung (30) mit Hilfe des Antriebs (28) in den in Figur 3b dargestellten geschlossenen Zustand gebracht und die Ableitung von Kondensat beendet. Hierzu wird die obere Kammer (28a) des Antriebs (28) von der Steuerung (30) mit Druckluft beaufschlagt.

Befindet sich das Verschlusselement (7) in dem geschlossenen Zustand (Figur 3b) sammelt sich Kondensat im Ventilraum (3). Der Temperatursensor (16) erfasst dabei permanent die Temperatur. Der Positionssensor (29b) bestätigt, dass sich das Verschlusselement (7) in dem geschlossenen Zustand befindet. Das in dem Ventilraum (3) befindliche Kondensat kühlt durch Abgabe der Wärme an die Umgebung ab. Durch die permanente Erfassung der Temperatur kann bestimmt werden wann das Kondensatventil öffnen soll. Je niedriger der untere Temperaturgrenzwert gewählt wird, desto mehr Kondensat fällt an und umso länger bleibt das Kondensatventil geöffnet. Lange Öffnungszeiten können sich aber ungünstig auswirken, wenn sich, wie normalerweise üblich, mehrere Kondensatventile im gleichen Anlagenbereich befinden. Die langen Öffnungszeiten der Kondensatventile können zu zeitlichen Überschneidungen der Öffnungszeiten führen, wodurch ein unerwünschter, großer Druckabfall in der Anlage entstünde. Daher werden der untere und obere Temperaturgrenzwert vorzugsweise so gewählt, dass sich kurze Öffnungszeiten und dafür eine größere Anzahl von Öffnungen ergibt.

Wird nun der eingestellte untere Temperaturgrenzwert erreicht, öffnet der Antrieb (28) das Kondensatventil. Dabei gelangt das freie Ende (28 d) der Kolbenstange aus dem Erfassungsbereich des unteren Positionssensors (29b), was die ordnungsgemäße Funktion des Antriebs des Kondensatventils bestätigt; es wird keine Fehlermeldung generiert. Sobald das freie Ende (28 d) der Kolbenstange den Erfassungsbereich des oberen Positionssensors (29a) erreicht, wird das ordnungsgemäße Öffnen des Kondensatventils bestätigt; es wird keine Fehlermeldung generiert.

Der in der Anlage vorherrschende Dampfdruck bewirkt ein schnelles Ableiten des Kondensats. Der dem abgeleiteten Kondensat nachströmende Dampf führt zu einem Anstieg der Temperatur im Ventilraum (3). Wird nun der eingestellte obere Temperaturgrenzwert erreicht, schließt der Antrieb (28) das Kondensatventil. Dabei gelangt das freie Ende (28 d) der Kolbenstange aus dem Erfassungsbereich des oberen Positionssensors (29a), was die ordnungsgemäße Funktion des Antriebs des Kondensatventils bestätigt; es wird keine Fehlermeldung generiert. Sobald das freie Ende (28 d) der Kolbenstange den Erfassungsbereich des unteren Positionssensors (29a) erreicht, wird das ordnungsgemäße Schließen des Kondensatventils bestätigt; es wird keine Fehlermeldung generiert. Nach dem Erreichen des unteren Positionssensors (29a) ist der Zyklus abgeschlossen. Sollte während des Zyklus eine der vorgenannten Bestätigungen ausbleiben, wird automatisch eine Fehlermeldung generiert.

Der erfindungsgemäße Kondensatableiter ermöglicht es, in den mit Dampf operierenden Prozessbereichen einer Abfüllanlage für Lebensmittel eine möglichst konstante Temperaturführung durch ein kontrolliertes Ableiten der permanent anfallenden Kondensatmengen sicherzustellen. Ein wesentlicher Vorteil besteht in der Möglichkeit einer Temperaturführung innerhalb eines schmalen Bandbereiches, ohne nennenswerte Druckverluste in der Abfüllanlage. Durch die Überwachung der einwandfreien Funktion der Kondensatventile in einer Abfüllanlage wird ein sicherer Prozessverlauf erreicht. Zugleich lassen sich gestörte Kondensatventile in der Abfüllanlage ohne langwierige Sucharbeiten automatisch detektieren. Fehlermeldungen können dem gestörten Kondensatventil sofort zugeordnet werden. Dadurch werden die Prozesse sicherer und die Risiken und Kosten minimiert. Die Fehlerart lässt sich eingrenzen auf einen Fehler in der Temperaturführung des Kondensatventils oder der Position des Verschlusselementes bzw. des damit verbundenen Antriebs. Defekte Sensoren können ohne Unterbrechung des Prozesses ausgewechselt werden.

Figur 4a zeigt einen so genannten Produktknoten (21) einer Abfüllanlage für flüssige Produkte, insbesondere Lebensmittel. Über den Produktknoten (21) gelangt das Produkt von einer Ringleitung (22), mit einem Vorlauf (22a) und einem Rücklauf (22b) zu einem nicht dargestellten Produkttank einer an den Produktknoten (21) angeschlossenen Füllmaschine. Üblicherweise sind an einer Ringleitung (22) der Abfüllanlage mehrer Füllmaschinen angeschlossen.

Ein in Figur 4b im Schnitt dargestelltes Doppelkammer-Produktventil (23) des Produktknotens (21) weist zwei übereinander liegende, durchgehend verbundene Ventilkammern (23a, 23 b) sowie zwei den Ventilkammern (23 a, 23 b) zugeordnete, unabhängig voneinander schaltbare Ventilkegel (23 c, 23 d) auf.

Im Produktionsbetrieb fließt das Produkt von der Ringleitung (22) über die untere Ventilkammer (23 a) und die obere Ventilkammer (23 b) und die Produktleitung (27) in den Produkttank, von wo es dann auf einzelne Füllstationen der Füllmaschine verteilt werden kann.

In bestimmten Betriebssituationen der Abfüllanlage ist eine verfahrenstechnisch sichere, aseptische Trennung zwischen der Ringleitung (22) und einer daran angeschlossenen Füllmaschine erforderlich, um eine Kontamination der aseptischen Bereiche zu verhindern.

Soll beispielsweise eine an die Ringleitung (22) angeschlossene Füllmaschine gereinigt werden, während andere angeschlossene Füllmaschinen produzieren, wird so verfahren, dass an dem Produktknoten (21) der zu reinigende Füllmaschine die untere Ventilkammer (23 a) des Doppelkammer-Produktventils (23) durch Schließen des unteren und oberen Ventilkegels (23 c, 23 d) den Zufluss des Produktes in die Füllmaschine unterbindet. Gleichzeitig wird die komplette untere Ventilkammer (23a) mit sterilem Dampf beaufschlagt, sodass eine aktive Dampfsperre zwischen der Ringleitung (22) und der angeschlossenen Füllmaschine entsteht. Die aktive Dampfsperre bewirkt, dass beispielsweise im Falle einer Undichtigkeit an dem geschlossenen unteren Ventilkegel (23 c) kein Produkt aus der Ringleitung (22) in die untere Ventilkammer (23 a) eindringen kann, da die Ventilkammer (23 a) durch den Dampf mit einem höheren Druck beaufschlagt wird als dem in der Ringleitung (22) herrschenden Druck. Ein Eindringen des sterilen Dampfes in die Ringleitung (22) ist indes unkritisch.

Der Dampf wird durch Öffnen eines unteren Absperrventils (24) in die untere Ventilkammer (23 a) geleitet. Das während der Dampfbeaufschlagung entstehende Kondensat wird permanent über einen Kondensatableiter (25) abgeleitet, der entsprechend den Darstellungen in Figuren 2a, 2b, 3a, 3b aufgebaut ist. Der Kondensatableiter (25) ist über eine Rohrleitung (26) mit dem Absperrventil (24) verbunden.

Während des Produktionsbetriebes der angeschlossenen Füllmaschine ist das Absperrventil (24) geschlossen, so dass kein Dampf in die untere Ventilkammer (23 a) des Doppelkammer-Produktventils (23) gelangt. Das Absperrventil (24) wird jedoch weiterhin mit Dampf beaufschlagt, sodass auch hier eine aktive Dampfsperre vorhanden ist.

An der oberen Ventilkammer ist ein weiteres, wahlweise mit Dampf oder Reinigungsmittel beaufschlagbares Absperrventil angeordnet, das der Übersichtlichkeit halber nicht dargestellt ist. Das anfallende Kondensat auch des oberen Absperrventils wird über den Kondensatableiter (25) abgeleitet.

**Bezugszeichenliste**

| **Nr.** | **Bezeichnung** |
|---|---|
| 1 | Zufluss |
| 2 | Auslass |
| 3 | Ventilraum |
| 4 | Dichtkegel |
| 5 | Ventilsitz |
| 6 | Drosselscheibe |
| 7 | Verschlusselement |
| 8 | Stößel |
| 9 | Längsachse |
| 10 | kegelstumpfförmiger Abschnitt |
| 11 | Boden |
| 12 | Zylindrischer Abschnitt |
| 13 | Ringraum |
| 14 | Seitenwand |
| 15 | Hülse |
| 16 | Temperatursensor |
| 17 | Wulst |
| 18 | Nut |
| 19 | Membran |
| 20 | Deckel |
| 21 | Produktknoten |
| 22 | Ringleitung |
| 22a | Vorlauf |
| 22b | Rücklauf |
| 23 | Doppelkammer-Produktventil |
| 23a | Ventilkammer |
| 23b | Ventilkammer |
| 23c | Ventilkegel |
| 23d | Ventilkegel |
| 24 | Absperrventil |
| 25 | Kondensatableiter |
| 26 | Rohrleitung |
| 27 | Produktleitung |
| 28 | Antrieb |
| 28a | Obere Kammer |
| 28b | Untere Kammer |
| 28c | Kolben |
| 28d | Freies Ende |
| 29a, b | Positionssensoren |
| 30 | Steuerung |

## Patentansprüche

1. Kondensatableiter mit einem Auslass (2) zum Ableiten von Kondensat aus einem Ventilraum (3), einem im geschlossenen Zustand auf einem Ventilsitz (5) aufsitzenden Verschlusselement (7) zum Öffnen und Schließen des Auslasses (2), wobei der Kondensatableiter einen Antrieb für das Verschlusselement (7) aufweist, um das Verschlusselement (7) in den geschlossenen Zustand und einen geöffneten Zustand zu bringen, wobei das Verschlusselement (7) einen sowohl im geöffneten als auch geschlossen Zustand des Verschlusselementes (7) in den Auslass (2) ragenden Abschnitt (12) aufweist und ein Ringraum (13) zwischen dem Abschnitt (12) und dem Auslass (2) sowohl im geöffneten als auch geschlossen Zustand des Verschlusselementes eine übereinstimmende Querschnittsfläche aufweist, **dadurch gekennzeichnet, dass** der Ventilsitz (5) in dem Ventilraum angeordnet ist und der Kondensatableiter einen Temperatursensor (16) zur Erfassung der Temperatur in dem Ventilraum (3) aufweist.

2. Kondensatableiter nach Anspruch 1, **dadurch gekennzeichnet, dass** der hohlzylindrisch ausgebildete Auslass (2) den zylindrisch ausgebildeten Abschnitt (12) des Verschlusselementes konzentrisch umgibt.

3. Kondensatableiter nach Anspruch 1 oder 2, **dadurch gekennzeichnet, dass** die Fläche des Ventilsitzes (5) kegelförmig ausgebildet ist.

4. Kondensatableiter nach einem der Ansprüche 1 bis 3, **dadurch gekennzeichnet, dass** eine Hülse (15) eine Wand des Ventilraums (3) durchsetzt, die Hülse (15) an der in den Ventilraum (3) ragenden Stirnseite geschlossen ausgeführt ist und die Hülse (15) den Temperatursensor (16) aufnimmt.

5. Kondensatableiter nach Anspruch 4, **dadurch gekennzeichnet, dass** die Hülse (15) aus einem gut wärmeleitendem Material mit einer Wandstärke von weniger als 0,5 mm besteht.

6. Kondensatableiter nach einem der Ansprüche 1 bis 5, **dadurch gekennzeichnet, dass** der Kondensatableiter mindestens einen Positionssensor (29a, 29b) zur Erfassung der Position des Antriebs (28) des Verschlusselements (7) aufweist.

7. Kondensatableiter nach Anspruch 6, **dadurch gekennzeichnet, dass** der mindestens eine Positionssensor (29a, 29b) derart eingerichtet ist, dass zumindest die Position des Antriebs (28) des Verschlusselementes (7) in dem geschlossenen und geöffneten Zustand des Verschlusselementes (7) erfassbar ist.

8. Kondensatableiter nach einem der Ansprüche 1 bis 7, **dadurch gekennzeichnet, dass** der Temperatursensor (16) mit einer Steuerung (30) verbunden ist, die derart eingerichtet ist, dass der Antrieb (28) das Verschlusselement (7) in den geöffneten Zustand bringt, wenn die erfasste Temperatur einen unteren Temperaturgrenzwert erreicht und der Antrieb (28) das Verschlusselement (7) in den geschlossenen Zustand bringt, wenn die erfasste Temperatur einen oberen Temperaturgrenzwert erreicht.

9. Kondensatableiter nach Anspruch 8, **dadurch gekennzeichnet, dass** der mindestens eine Positionssensor (29a, 29b) ebenfalls mit der Steuerung (30) verbunden ist, die derart eingerichtet ist, dass sie abhängig von der erfassten Position des Antriebs (28) erkennt, ob der Antrieb (28) das Verschlusselement (7) nach Erreichen des unteren Temperaturgrenzwerts bewegt und/oder in den geöffneten Zustand gebracht hat und ob der Antrieb (28) das Verschlusselement (7) nach Erreichen des oberen Temperaturgrenzwerts bewegt und/oder in den geschlossenen Zustand gebracht hat.

10. Kondensatableiter nach Anspruch 9, **dadurch gekennzeichnet, dass** die Steuerung ein Fehlersignal erzeugt, wenn sich der Antrieb (28) des Verschlusselementes (7) nach Erreichen eines der Temperaturgrenzwerte nicht bewegt und/oder der Antrieb (28) das Verschlusselement (7) nach Erreichen eines der Temperaturgrenzwerte nicht in den geöffneten bzw. geschlossenen Zustand gebracht hat.

11. Verfahren zum Ableiten von Kondensat durch einen Auslass (2) eines Ventilraumes(3) mit einem in einem geschlossenen Zustand auf einem Ventilsitz (5) aufsitzenden Verschlusselement (7) zum Öffnen und Schließen des Auslasses (2), **dadurch gekennzeichnet, dass**
- das Verschlusselement zum Ableiten des Kondensats derart von dem geschossenen Zustand in einen geöffneten Zustand gebracht wird, dass ein Abschnitt (12) des Verschlusselementes sowohl im geöffneten als auch geschlossen Zustand des Verschlusselementes von dem Auslass (2) unter Ausbildung eines Ringraumes (13) mit einer übereinstimmenden Querschnittsfläche umgeben wird,
- die Temperatur in dem Ventilraum (3) erfasst wird,
- ein Antrieb (28) des Verschlusselementes (7) aktiviert wird, um das Verschlusselementes (7) in den geöffneten Zustand zu bringen, wenn die erfasste Temperatur einen unteren Temperaturgrenzwert erreicht und
- der Antrieb des Verschlusselementes (7) aktiviert wird, um das Verschlusselementes (7) in den geschlossenen Zustand zu bringen, wenn die erfasste Temperatur einen oberen Temperaturgrenzwert erreicht.

12. Verfahren nach Anspruch 11, **dadurch gekennzeichnet, dass** die Position des Verschlusselementes (7) erfasst wird und abhängig von der erfassten Position des Verschlusselementes (7) erkannt wird, ob das Verschlusselement (7) nach Erreichen des unteren Temperaturgrenzwerts von dem aktivierten Antrieb (28) bewegt und/oder in den geöffneten Zustand gebracht wurde und ob das Verschlusselement (7) nach Erreichen des oberen Temperaturgrenzwerts von dem aktivierten Antrieb (28) bewegt und/oder in den geschlossenen Zustand gebracht wurde.

13. Verfahren nach Anspruch 12, **dadurch gekennzeichnet, dass** ein Fehlersignal erzeugt wird, wenn sich der Antrieb (28) des Verschlusselementes (7) nach Erreichen eines der Temperaturgrenzwerte nicht bewegt und/oder der Antrieb (28) das Verschlusselement (7) nach Erreichen eines der Temperaturgrenzwerte nicht in den geöffneten bzw. geschlossenen Zustand gebracht hat.

14. Verwendung eines Kondensatableiters nach einem der Ansprüche 1 bis 10 zum Ableiten von Kondensat aus Dampf führenden Leitungen einer Abfüllanlage für Lebensmittel.

## Claims

1. Steam trap having an outlet (2) for draining condensate from a valve chamber (3), a closure element (7) which is seated on a valve seat (5) in the closed state for opening and closing the outlet (2), wherein the steam trap has a drive for the closure element (7) in order to bring the closure element (7) into the closed state and an opened state, wherein the closure element (7) has a section (12) that projects into the outlet (2) both in the opened and closed state of the closure element (7) and an annular space (13) between the section (12) and the outlet (2) has a coincident cross-sectional area both in the opened and closed state of the closure element, **characterized in that** the valve seat (5) is arranged in the valve chamber and the steam trap has a temperature sensor (16) for detecting the temperature in the valve chamber (3).

2. The steam trap according to claim 1, **characterized in that** the hollow-cylindrical outlet (2) concentrically surrounds the cylindrical section (12) of the closure element.

3. The steam trap according to claim 1 or 2, **characterized in that** the area of the valve seat (5) is configured to be conical.

4. The steam trap according to any one of claims 1 to 3, **characterized in that** a sleeve (15) passes through a wall of the valve chamber (3), the sleeve (15) is closed on the end face projecting into the valve chamber (3) and the sleeve (15) receives the temperature sensor (16).

5. The steam trap according to claim 4, **characterized in that** the sleeve (15) consists of a good heat-conducting material having a wall thickness of less than 0.5 mm.

6. The steam trap according to any one of claims 1 to 5, **characterized in that** the steam trap has at least one position sensor (29a, 29b) for detecting the position of the drive (28) of the closure element (7).

7. The steam trap according to claim 6, **characterized in that** the at least one position sensor (29a, 29b) is adapted in such a manner that at least the position of the drive (28) of the closure element (7) can be detected in the closed and opened state of the closure element (7).

8. The steam trap according to any one of claims 1 to 7, **characterized in that** the temperature sensor (16) is connected to a controller (30) which is adapted in such a manner that the drive (28) brings the closure element (7) into the opened state when the detected temperature reaches a lower temperature limit and the drive (28) brings the closure element (7) into the closed state when the detected temperature reaches an upper temperature limit.

9. The steam trap according to claim 8, **characterized in that** the at least one position sensor (29a, 29b) is also connected to the controller (30) which is adapted in such a manner that depending on the detected position of the drive (28) it identifies whether the drive (28) has moved the closure element (7) after reaching the lower temperature limit and/or brought it into the opened state and whether the drive (28) has moved the closure element (7) after reaching the upper temperature limit and/or has brought it into the closed state.

10. The steam trap according to claim 9, **characterized in that** the controller produces an error signal when the drive (28) of the closure element (7) has not moved after reaching one of the temperature limits and/or the drive (28) has not brought the closure element (7) into the opened or closed state after reaching one of the temperature limits.

11. Method for draining condensate through an outlet (2) of a valve chamber (3) with a closure element (7) which is seated on a valve seat (5) in a closed state for opening and closing the outlet (2), **characterized in that**
- the closure element for draining the condensate is brought from the closed state into an opened state in such a manner that a section (12) of the closure element both in the opened and closed state of the closure element is surrounded by the outlet (2) to form an annular space (13) having a coincident cross-sectional area,
- the temperature in the valve chamber (3) is detected,
- a drive (28) of the closure element (7) is activated in order to bring the closure element (7) into the opened state when the detected temperature reaches a lower temperature limit and
- the drive of the closure element (7) is activated in order to bring the closure element (7) into the closed state when the detected temperature reaches an upper temperature limit.

12. The method according to claim 11, **characterized in that** the position of the closure element (7) is detected and depending on the detected position of the closure element (7) it is identified whether the closure element (7) after reaching the lower temperature limit has been moved by the activated drive (28) and/or brought into the opened state and whether the closure element (7) after reaching the upper temperature limit has been moved by the activated drive (28) and/or has been brought into the closed state.

13. The method according to claim 12, **characterized in that** an error signal is generated when the drive (28) of the closure element (7) is not moved after reaching one of the temperature limits and/or the drive (28) has not brought the closure element (7) into the opened or closed state after reaching one of the temperature limits.

14. Use of a steam trap according to any one of claims 1 to 10 for draining condensate from steam-conducting lines of a filling plant for foodstuffs.

## Revendications

1. Purgeur de condensats, avec une sortie (2) pour évacuer des condensats hors d'une chambre de soupape (3), un élément de fermeture (7) reposant dans la position fermée sur un siège de soupape (5), destiné à ouvrir et à fermer la sortie (2), le purgeur de condensats comportant un entraînement pour l'élément de fermeture (7), pour amener l'élément de fermeture (7) dans la position fermée et dans une position ouverte, l'élément de fermeture (7) comportant une portion (12) saillant aussi bien dans la position ouverte que dans la position fermée de l'élément de fermeture (7) dans la sortie (2) et un espace annulaire (13) entre la portion (12) et la sortie (2) présentant aussi bien dans la position ouverte que dans la position fermée de l'élément de fermeture une surface de section transversale concordante, **caractérisé en ce que** le siège de soupape (5) est placé dans la chambre de soupape et le purgeur de condensats comporte un capteur de température (16) pour détecter la température dans la chambre de soupape (3).

2. Purgeur de condensats selon la revendication 1, **caractérisé en ce que** la sortie (2) conçue sous la forme d'un cylindre creux entoure de manière concentrique la portion (12) conçue sous forme cylindrique de l'élément de fermeture.

3. Purgeur de condensats selon la revendication 1 ou 2, **caractérisé en ce que** la surface du siège de soupape (5) est conçue en étant cunéiforme.

4. Purgeur de condensats selon l'une quelconque des revendications 1 à 3, **caractérisé en ce qu'**une douille (15) traverse une paroi de la chambre de soupape (3), sur la face frontale saillant dans la chambre de soupape (3), la douille (15) étant conçue en étant fermée et la douille (15) recevant le capteur de température (16).

5. Purgeur de condensats selon la revendication 4, **caractérisé en ce que** la douille (15) est conçus dans une matière bien thermoconductrice, avec une épaisseur de paroi inférieure à 0,5 mm.

6. Purgeur de condensats selon l'une quelconque des revendications 1 à 5, **caractérisé en ce que** le purgeur de condensats comporte au moins un capteur de position (29a, 29b) pour détecter la position de l'entraînement (28) de l'élément de fermeture (7).

7. Purgeur de condensats selon la revendication 6, **caractérisé en ce que** l'au moins un capteur de position (29a, 29b) est aménagé de telle sorte qu'au moins la position de l'entraînement (28) de l'élément de fermeture (7) puisse être détectée dans la position fermée et ouverte de l'élément de fermeture (7).

8. Purgeur de condensats selon l'une quelconque des revendications 1 à 7, **caractérisé en ce que** le capteur de température (16) est connecté avec un système de commande (30) qui est aménagé de telle sorte que l'entraînement (28) amène l'élément de fermeture (7) dans la position ouverte, lorsque la température détectée atteint une valeur limite inférieure de température et que l'entraînement (28) amène l'élément de fermeture (7) dans la position fermée lorsque la température détectée atteint une valeur limite supérieure de température.

9. Purgeur de condensats selon la revendication 8, **caractérisé en ce que** l'au moins un capteur de position (29a, 29b) est également connecté avec le système de commande (30) qui est aménagé sorte à identifier en fonction de la position détectée de l'entraînement (28) si l'entraînement (28) a déplacé l'élément de fermeture (7) après l'atteinte de la valeur limite inférieure de température et/ou l'a amené dans la position ouverte et si l'entraînement (28) a déplacé l'élément de fermeture (7) après l'atteinte de la valeur limite supérieure de température et/ou l'a amené dans la position fermée.

10. Purgeur de condensats selon la revendication 9, **caractérisé en ce que** le système de commande génère un signal de défaut lorsqu'après l'atteinte de l'une des valeurs limites de température, l'entraînement (28) de l'élément de fermeture (7) ne se déplace pas et/ou après l'atteinte de l'une des valeurs limites de température, l'entraînement (28) n'a pas amené l'élément de fermeture (7) dans la position ouverte ou fermée.

11. Procédé destiné à évacuer des condensats à travers une sortie (2) d'une chambre de soupape (3) avec un élément de fermeture (7) reposant dans la position fermée sur un siège de soupape (5), destiné à ouvrir et à fermer la sortie (2), **caractérisé en ce que**
- pour évacuer les condensats, on amène l'élément de fermeture de la position fermée dans une position ouverte, de telle sorte qu'aussi bien dans la position ouverte que dans la position fermée, une portion (12) de l'élément de fermeture soit entourée par la sortie (2), en formant un espace annulaire (13) avec une surface de section transversale concordante,
- on détecte la température dans la chambre de soupape (3),
- on active un entraînement (28) de l'élément de fermeture (7), pour amener l'élément de fermeture (7) dans la position ouverte, lors la température détectée a atteint une valeur limite inférieure de température,
- on active l'entraînement de l'élément de fermeture (7) pour amener l'élément de fermeture (7) dans la position fermée, lorsque la température détectée a atteint une valeur limite supérieure de température.

12. Procédé selon la revendication 11, **caractérisé en ce qu'**on détecte la position de l'élément de fermeture (7) et en fonction de la position détectée de l'élément de fermeture (7), on identifie si après l'atteinte de la valeur limite inférieure de température, l'élément de fermeture (7) a été déplacé par l'entraînement (28) activé et/ou a été amené dans la position ouverte et si, après l'atteinte de la valeur limite supérieure de température, l'élément de fermeture (7) a été déplacé par l'entraînement (28) activé et/ou a été amené dans la position fermée.

13. Procédé selon la revendication 12, **caractérisé en ce qu'**un signal de défaut est généré lorsqu'après l'atteinte de l'une des valeurs limites de température, l'entraînement (28) de l'élément de fermeture (7) ne se déplace pas et/ou après l'atteinte de l'une des valeurs limites de température, l'entraînement (28) n'a pas amené l'élément de fermeture (7) dans la position ouverte ou fermée.

14. Utilisation d'un purgeur de condensats selon l'une quelconque des revendications 1 à 10 pour évacuer des condensats hors de conduits guidant de la vapeur d'un système de remplissage de produits alimentaires.
